# EUROPEAN PATENT SPECIFICATION

(11) **EP 2 866 070 B1**
(45) Date of publication and mention of the grant of the patent: **09.08.2023**
(21) Application number: 13810778.4
(22) Date of filing: 19.03.2013
(51) Int. Cl.: G02B 21/26, G02B 21/36, H04N 23/67, H04N 23/55, G02B 21/24

(54) **MICROSCOPE IMAGING DEVICE, AND MICROSCOPE IMAGING METHOD**
MIKROSKOPISCHE BILDGEBUNGSVORRICHTUNG UND MIKROSKOPISCHES BILDGEBUNGSVERFAHREN
DISPOSITIF D'IMAGERIE À MICROSCOPE, ET PROCÉDÉ D'IMAGERIE À MICROSCOPE

(30) Priority: 25.06.2012 JP 2012142131
(43) Date of publication of application: 29.04.2015
(73) Proprietor: Hamamatsu Photonics K.K., Hamamatsu-shi, Shizuoka 435-8558 (JP)
(72) Inventor: OKUGAWA, Masatoshi, Hamamatsu-shi Shizuoka 435-8558 (JP); TANABE, Hiroshi, Hamamatsu-shi Shizuoka 435-8558 (JP)
(74) Representative: Hoffmann Eitle
(86) International application number: PCT/JP2013/057830
(87) International publication number: WO 2014/002536

(56) References cited:
- EP-A1- 2 023 127
- JP-A- S5 495 256
- JP-A- H05 232 385
- JP-A- 2001 228 404
- JP-A- 2009 053 398
- US-A1- 2011 292 197

## Description

### Technical Field

The present invention relates to a microscope imaging system and a microscope imaging method.

### Background Art

WO 2006/098443 A1 describes a microscope image pickup system applicable to inspection apparatus for cell analysis or the like. This system is provided with a specimen mount stage having a specimen mount face on which a specimen can be mounted, an imaging unit for sequentially imaging each of parts of an imaging target area on the specimen mount face, and an objective lens for imaging a microscope image on the imaging unit. This specimen mount face is inclined relative to a scan plane orthogonal to the optical axis of the objective lens. Therefore, while the specimen mount stage is moved in a direction orthogonal to the optical axis, the position of the imaging target area moves relative to the objective lens in a direction in which it becomes closer to or farther from the objective lens. In this configuration, the focus position can be adjusted onto the specimen by moving the objective lens in the one direction along the optical axis, in scanning an imaging area of the imaging unit in the imaging target area in a predetermined direction.

US 2011/292197 A1 discloses an image forming apparatus for forming a clear image of a body tissue. An XY stage may additionally be moved in the Z direction. A similar image forming apparatus is known from EP 2 023 127 A1. JP 2001-228404 A discloses a microscope having a stage for supporting an object to be inspected and an objective lens.

### Summary of Invention

### Technical Problem

In the microscope image pickup system described in Patent Literature 1, the specimen mount face is inclined relative to the optical axis. Because of this inclination, there is difference in optical path length from the specimen to the imaging element in the two-dimensional imaging target area. With the difference in optical path length, it may be difficult to achieve accurate focus adjustment in the imaging target area. Then, it is conceivable to adopt a method of arranging the imaging element so as to be inclined relative to the optical axis, thereby cancelling the difference in optical path length. In the inclined arrangement of the imaging element, however, it is difficult to adjust the angle of the imaging element. Particularly, when the imaging element is a 3-CCD type CCD device with CCDs respectively corresponding to red, green, and blue, it is particularly difficult to adjust the angle of the imaging element, because there are three light receiving surfaces.

In view of the above problem, the present invention provides a microscope imaging system allowing the imaging element to be readily arranged, while facilitating accurate focus adjustment, and a microscope imaging method using the microscope imaging system.

### Solution to Problem

A microscope imaging system according to the present invention is defined in claim 1 and comprises: a stage having a mount face on which a specimen is to be mounted; an imaging unit having an imaging element for imaging a part of an imaging region set on the mount face; and a imaging optical unit arranged between the stage and the imaging unit and having an objective lens for imaging light from a part of the imaging region onto the imaging unit. The stage is arranged so that the mount face is orthogonal to an optical axis of the objective lens. The stage is configured to be movable in a direction obliquely intersecting with the optical axis while the mount face is kept orthogonal to the optical axis.

In the foregoing microscope imaging system, since the specimen is mounted on the mount face orthogonal to the optical axis of the objective lens, no difference is made in the optical path length from the specimen mounted on the stage to the imaging element, in the imaging region. Therefore, the imaging element can be readily arranged because the light receiving surface of the imaging element can be simply arranged so as to be orthogonal to the optical axis. Furthermore, the stage with the specimen thereon is configured to be movable in the direction obliquely intersecting with the optical axis. With this movement, the stage and the objective lens move relative to each other in the direction orthogonal to the optical axis and move so as to become closer to or farther from each other in one direction along the optical axis. Therefore, the focus can be adjusted on the specimen with high accuracy in such a manner that the movement of the stage in one direction along the optical axis is followed by the movement of the objective lens in the one direction.

The microscope imaging system further comprises a moving mechanism for moving the stage, and a direction in which the moving mechanism moves the stage obliquely intersects with the optical axis. In this configuration, the specimen mounted on the mount face of the stage is moved in the direction obliquely intersecting with the optical axis. This movement of the specimen simultaneously realizes the movement in the direction orthogonal to the optical axis and the movement in the direction along the optical axis. Therefore, by moving the objective lens in the one direction along the optical axis, the focus can be adjusted on the specimen moving in the direction along the optical axis, with high accuracy.

The moving mechanism may have a slant face in contact with the stage, and the slant face may extend in the direction obliquely intersecting with the optical axis. In this configuration, by moving the stage along the slant face, the stage can be securely moved in the direction obliquely intersecting with the optical axis.

An angle between the mount face of the stage and a contact face of the stage in contact with the slant face of the moving mechanism may be equal to an angle between a virtual plane orthogonal to the optical axis and the slant face of the moving mechanism. In this configuration, the stage can be arranged on the moving mechanism so that the mount face is orthogonal to the optical axis.

The microscope imaging system according to one aspect of the present invention may further comprise: a base unit for holding the moving mechanism, and the base unit may hold the moving mechanism so that the direction in which the moving mechanism moves the stage is coincident with the direction obliquely intersecting with the optical axis. This configuration allows the stage to be securely moved in the direction obliquely intersecting with the optical axis.

The imaging element may be arranged on the optical axis and may acquire a two-dimensional image of a part of the imaging region. In this configuration, two-dimensional images captured from respective parts of the specimen are acquired, whereby an image of the whole specimen can be efficiently acquired.

The imaging element may acquire focus information of the objective lens. This configuration allows highly accurate focus adjustment to be achieved without need for execution of complicated angle adjustment for the imaging element.

A microscope imaging method according to the present invention is defined in claim 7 and has: a movement step of moving a stage having a mount face on which a specimen is to be mounted, and an objective lens for imaging light from a part of an imaging region set on the mount face; and an imaging step of condensing the light imaged by the objective lens, onto an imaging unit and imaging a part of the imaging region, based on the light condensed on the imaging unit. The movement step comprises: moving the stage in a direction obliquely intersecting with the optical axis, in a state in which the mount face is orthogonal to an optical axis of the objective lens.

In the foregoing microscope imaging method, since the specimen to be imaged is mounted on the mount face orthogonal to the optical axis of the objective lens, no difference is made in the optical path length from the specimen mounted on the stage to the imaging element, in the imaging region. Therefore, the imaging element can be readily arranged because the light receiving surface of the imaging element can be simply arranged so as to be orthogonal to the optical axis. Furthermore, the stage with the specimen thereon is moved in the direction obliquely intersecting with the optical axis. With this movement, the stage and the objective lens move relative to each other in the direction orthogonal to the optical axis and move so as to become closer to or farther from each other in one direction along the optical axis. Therefore, the focus can be adjusted on the specimen with high accuracy in such a manner that at the movement of the stage in the one direction along the optical axis is followed by the movement of the objective lens in the one direction.

### Advantageous Effect of Invention

The present invention has provided the microscope imaging system allowing the imaging element to be readily arranged, while facilitating the accurate focus adjustment, and the microscope imaging method using the microscope imaging system.

### Brief Description of Drawings

Fig. 1 is a drawing schematically showing a configuration of a microscope imaging system of the first embodiment.
Fig. 2 is a drawing showing major steps in a microscope imaging method using the microscope imaging system.
Fig. 3 is a drawing for explaining major steps in the microscope imaging method.
Fig. 4 is a drawing for explaining a glass slide used in the microscope imaging method.
Fig. 5 is a drawing schematically showing a configuration of a microscope imaging system of the second embodiment.
Fig. 6 is a drawing schematically showing a configuration of a microscope imaging system of a comparative example.

### Description of Embodiments

Embodiments of the microscope imaging system 1A and the microscope imaging method according to one aspect of the present invention will be described below in detail with reference to the accompanying drawings. In the description of the drawings the same elements will be denoted by the same reference signs, without redundant description.

### <First Embodiment>

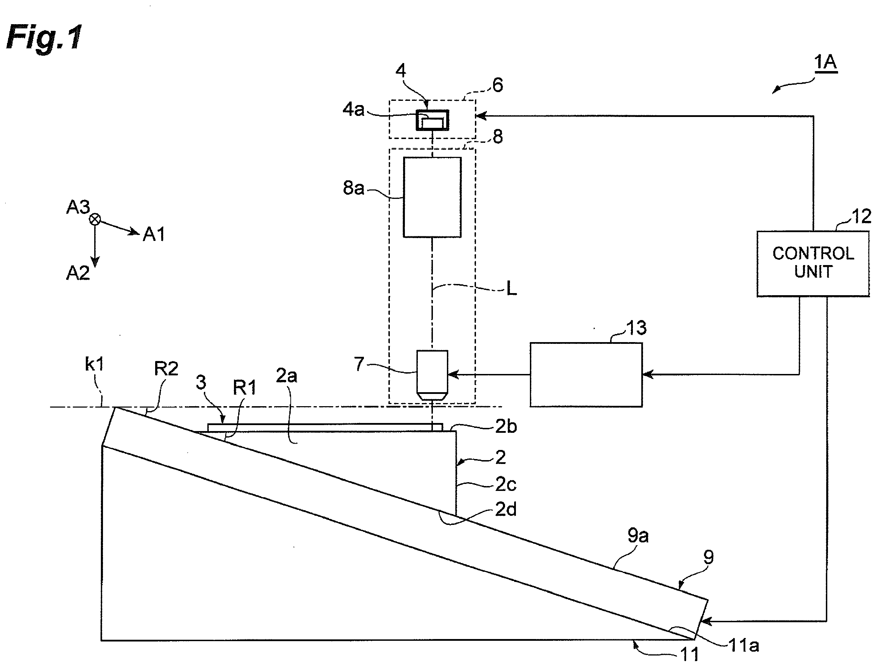

Fig. 1 is a drawing schematically showing a configuration of the microscope imaging system 1A according to the present embodiment. The microscope imaging system 1A is a so-called virtual slide scanner and system for sequentially acquiring microscope images of a specimen while moving the specimen 3 mounted on a stage 2, in a predetermined direction. This specimen 3 is, for example, one wherein a piece of tissue such as pathological tissue is mounted on a glass slide (slide glass). The microscope imaging system 1A images parts of this specimen 3 and combines those captured images of parts of the specimen 3 to acquire two-dimensional image data of the specimen.

The microscope imaging system 1A is provided with the stage 2 on which the specimen 3 as an imaging target is to be mounted, an imaging unit 6 having an imaging element 4, and a imaging optical unit(imaging optics) 8 including an objective lens 7. Furthermore, the microscope imaging system 1A is provided with a moving mechanism 9 for moving the stage 2, a base unit 11 for holding the moving mechanism 9, a control unit 12, and a focus adjustment driving mechanism 13 for moving the objective lens 7 in a direction along the optical axis L. It is noted that a coordinate system is set in each drawing and the description will be given using this coordinate system when needed. It is assumed herein that direction A1 is defined as a direction obliquely intersecting with the optical axis L of the objective lens 7 and one direction A2 as a direction along the optical axis L. In addition, direction A3 is defined as a direction orthogonal to each of the direction A1 and one direction A2.

The stage 2, while supporting the specimen 3 as an imaging target, moves the specimen 3 in the direction A1 obliquely intersecting with the optical axis L by means of the below-described moving mechanism 9. The stage 2 is a member having a triangular prism shape, which includes end faces 2a of a right triangle extending along the optical axis L, a mount face 2b orthogonal to the optical axis L, an orthogonal face 2c being orthogonal to the mount face 2b and extending along the optical axis L, and a contact face 2d being a slant face continuous from an end of the mount face 2b to an end of the orthogonal face 2c. The specimen 3 is mounted on the mount face 2b. Since the mount face 2b is orthogonal to the optical axis L, the surface of the slide glass of the specimen 3 mounted on the mount face 2b is also arranged so as to be orthogonal to the optical axis L. Furthermore, the contact face 2d is in contact with the below-described moving mechanism 9.

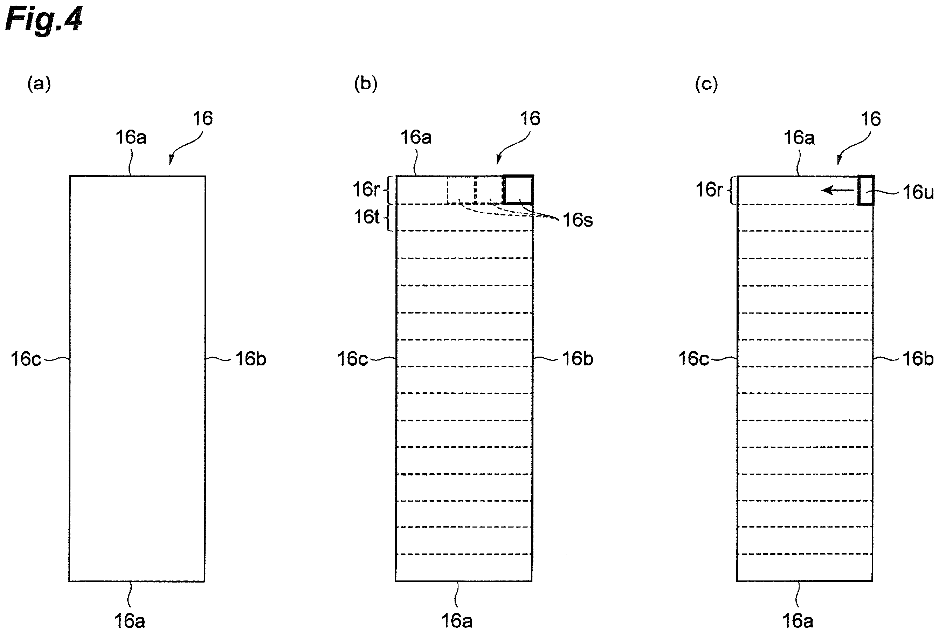

The specimen 3 is, for example, one wherein a piece of tissue is mounted on the slide glass. Part (a) of Fig. 4 shows slide glass 16 used in the microscope imaging system 1A. The slide glass 16 normally has the length of short sides 16a of 25 mm and the length of long sides 16b, 16c of 75 mm. Therefore, for acquiring an enlarged image of the specimen 3, images are acquired from respective imaging regions with movement from one to another imaging region of one field. Then the acquired images are combined to create image data of the whole of the slide glass 16.

With reference to Fig. 1, the imaging unit 6 images a part of the specimen 3 mounted on the stage 2, to acquire image data of the specimen 3. The imaging unit 6 is arranged opposite to the mount face 2b with the imaging optical unit 8 in between on the optical axis L above the stage 2. The imaging unit 6 has the imaging element 4 for imaging a part of an imaging region set on the mount face 2b. The imaging element 4 is arranged so that a light receiving surface 4a thereof is orthogonal to the optical axis L. The imaging element 4 to be used herein is, for example, an imaging element capable of acquiring a two-dimensional image, such as an area CCD sensor or area CMOS sensor. A signal is fed from the control unit 12 to this imaging unit 6, to control operation of the imaging element 4.

The imaging optical unit 8 has the objective lens 7 and the optics 8a including a imaging lens, for imaging light from a part of the imaging region on the imaging element 4, and is located between the stage 2 and the imaging unit 6. The imaging optical unit 8 images an enlarged image of the specimen 3 on the imaging element 4 of the imaging unit 6, by these objective lens 7 and optics 8a including a relay lens and others. An enlargement ratio thereof is defined by a magnification of the objective lens 7 and a magnification of the optics 8a. The objective lens 7 is provided with the focus adjustment driving mechanism 13 for moving the objective lens 7 in the direction along the optical axis L. The focus adjustment driving mechanism 13 has a configuration of a combination of a ball screw mechanism with a versatile stepping motor. By adopting the focus adjustment driving mechanism 13 having this configuration, it is possible to reduce manufacturing cost of the microscope imaging system 1A. A signal is fed from the control unit 12 to this focus adjustment driving mechanism 13, to adjust the position of the objective lens 7 so as to focus on the specimen 3. The optics 8a may be optionally equipped with an optical component such as an optical filter as occasion may demand. When the optics 8a is configured with a spectral optics such as a prism and the imaging element 4 is made to receive each of spectral light portions, the system can acquire a color image of the specimen 3. Without use of the spectral optics, the system can also acquire a color image of the specimen 3 when the imaging element 4 to be applied is an area CCD sensor or area CMOS sensor with color filters.

The moving mechanism 9 is a two-dimensional stage for moving the stage 2 along a plane obliquely intersecting with the optical axis L. The moving mechanism 9 supports the stage 2. This two-dimensional stage to be used is, for example, an X-, Y-axis linear ball guide stage. Namely, the moving mechanism 9 moves the stage 2 in the direction A1 obliquely intersecting with the optical axis L and in the direction A3 orthogonal to the direction A1. The moving mechanism 9 has the slant face 9a extending in the direction A1 and in the direction A3 and the contact face 2d of the stage 2 is in contact on the slant face 9a. A control signal is fed from the control unit 12 to this moving mechanism 9, to control amounts of movement of the stage 2 in the directionAl and in the direction A3.

The following will describe the relationship among the mount face 2b of the stage 2, the contact face 2d of the stage 2, and the slant face 9a of the moving mechanism 9. An angle between the mount face 2b and the contact face 2d is angle R1. The angle R1 is, for example, from five minutes to ten minutes (5π/10800 radian to 10π/10800 radian) and is preferably about seven minutes (7π/10800 radian). Here, one minute is an angle of one sixtieth of one degree and one minute is equal to π/10800 radian. When a virtual plane k1 is set as a virtual plane orthogonal to the optical axis L, an angle between this virtual plane k1 and the slant face 9a is angle R2. This angle R2 is set to be equal to the angle R1. As the angle R1 and angle R2 are set in this way, the mount face 2b of the stage 2 supported on the slant face 9a becomes orthogonal to the optical axis L.

The base unit 11 is a part which holds the moving mechanism 9. The base unit 11 has a holding face 11a for holding the moving mechanism 9 and the moving mechanism 9 is held on the holding face 11a. The holding face 11a is a slant face extending in the direction A1. As the moving mechanism 9 is held on this holding face 11a, the direction of movement of the moving mechanism 9 is set to the direction A1.

The control unit 12 controls the moving mechanism 9 to move the stage 2 in the direction A1 and in the direction A3. Furthermore, it controls the focus adjustment driving mechanism 13 so as to adjust the focus of the objective lens 7 on the specimen 3 in correspondence to movement of the stage 2 in the direction A1. Then it controls the imaging element 4 so as to image the specimen 3 at a predetermined position in the imaging region. The control unit 12 is configured by making use of hardware and software of a personal computer and is equipped with an input/output device, an A/D converter, a ROM for storage of programs, data and others, a RAM for temporary storage of image data and others, a CPU to execute programs, and so on, as hardware.

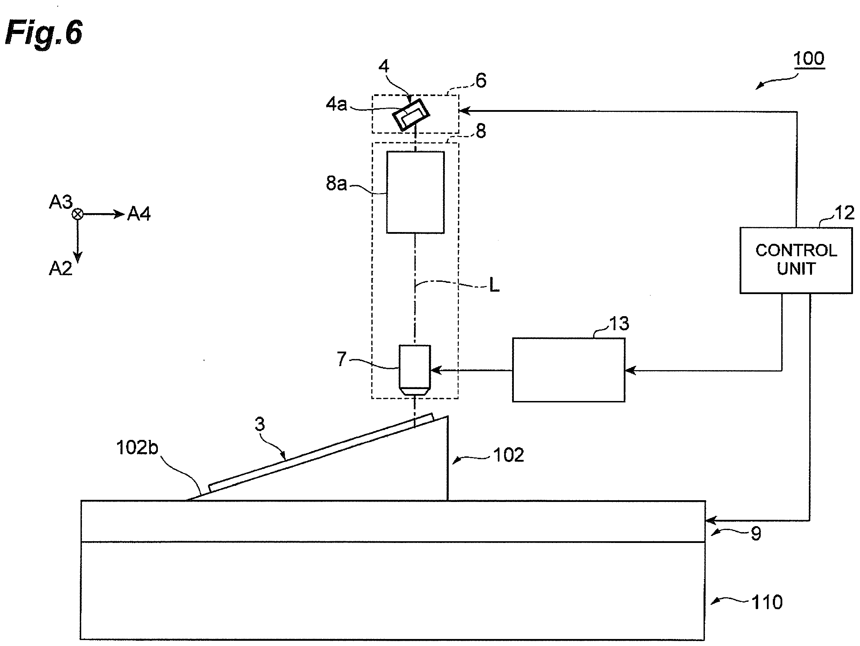

Now, a microscope imaging system according to a comparative example will be described below. Fig. 6 is a drawing schematically showing a configuration of the microscope imaging system 100 according to the comparative example. The microscope imaging system 100 is different from the microscope imaging system 1A mainly in that a mount face 102b of a stage 102 is inclined relative to the optical axis L, the stage 102 is moved in a direction A4 orthogonal to the optical axis L, and the light receiving surface 4a of the imaging element 4 is inclined relative to the optical axis L. The other configuration of the microscope imaging system 100 is the same as that of the microscope imaging system 1A. In the microscope imaging system 100, the stage 102 moves in the direction A4 orthogonal to the optical axis L, whereby the imaging region moves in one direction and the specimen 3 moves in one direction A2 away along the optical axis L from the objective lens 7. Therefore, the focus can be adjusted onto the specimen 3 by moving the objective lens 7 only in the one direction A2.

However, when the two-dimensional imaging element 4 is arranged so as to be orthogonal to the optical axis L in the microscope imaging system 100, there occurs difference in optical path length in the imaging region because the mount face 102b is inclined relative to the optical axis L. Because of this difference in optical path length, there are cases where it is difficult to adjust the focus with high accuracy. Then, for cancelling the difference in optical path length, it is necessary to arrange the two-dimensional imaging element 4 so as to be inclined relative to the optical axis L. This inclination of the two-dimensional imaging element 4 relative to the optical axis L is set to be equal to the square of the magnification of the objective lens 7 times the inclination of the mount face 102b. For example, when the objective lens 7 used has the magnification of ×20, the two-dimensional imaging element 4 needs to be inclined relative to the optical axis L by 400 times the inclination of the mount face 102b. This configuration can possibly make it difficult to arrange the two-dimensional imaging element 4.

In contrast to it, the microscope imaging system 1A of the present embodiment is configured to mount the specimen 3 on the mount face 2b orthogonal to the optical axis L of the objective lens 7, as shown in Fig. 1, whereby no difference is made in the optical path length from the specimen 3 mounted on the stage 2 to the imaging element 4 in the imaging region. Therefore, the light receiving surface 4a of the imaging element 4 can be simply arranged so as to be orthogonal to the optical axis L, whereby the two-dimensional imaging element 4 can be readily arranged.

Furthermore, the microscope imaging system 1A is configured so that the stage 2 with the specimen 3 thereon can be moved in the direction A1 obliquely intersecting with the optical axis L. With this movement, the stage 2 and the objective lens 7 move relative to each other in the direction A1 and move so as to become closer to or farther from each other along the optical axis L. Therefore, by letting the objective lens 7 follow the movement of the mount face 2b in the direction along the optical axis L, it become possible to adjust the focus on the specimen 3 with high accuracy. Accordingly, the movement of the objective lens 7 to adjust the focus on the specimen 3 is restricted, for example, to the one direction A2, whereby the focus can be adjusted on the specimen 3 with high accuracy while suppressing influence of lost motion or the like of the focus adjustment driving mechanism 13. By adopting this configuration, even if the focus adjustment driving mechanism 13 for driving the objective lens 7 has the configuration of the combination of the ball screw mechanism with the stepping motor which can give rise to lost motion, high-accuracy focus adjustment can be achieved while suppressing occurrence of lost motion because the drive direction is restricted to the one direction A2.

Furthermore, since the movement of the objective lens 7 is limited to the one direction A2 along the optical axis L, occurrence of vibration, which can be caused with bidirectional drive of the objective lens 7, is suppressed. Therefore, an image of the specimen 3 can be acquired with accuracy while the focus is adjusted on the specimen 3 with higher accuracy.

As descried above, the microscope imaging system 1A of the present embodiment can solve the problem of the microscope imaging system 100 of the comparative example.

The moving mechanism 9 has the slant face 9a in contact with the stage 2 and the slant face 9a extends in the direction A1 obliquely intersecting with the optical axis L. By this configuration, the stage 2 can be surely moved in the direction A1 obliquely intersecting with the optical axis L by moving the stage 2 along the slant face 9a.

The angle R1 between the mount face 2b of the stage 2 and the contact face 2d of the stage 2 in contact with the slant face 9a of the moving mechanism 9 is equal to the angle R2 between the virtual plane k1 orthogonal to the optical axis L and the slant face 9a of the moving mechanism 9. By this configuration, the stage 2 can be arranged on the moving mechanism 9 so that the mount face 2b is orthogonal to the optical axis L. Then, the stage 2 can be moved in the direction A1 obliquely intersecting with the optical axis L readily and accurately while the optical axis L and the mount face 2b are maintained in an orthogonal state. Furthermore, it is feasible to readily adjust the direction of movement of the stage 2.

The microscope imaging system 1A is further provided with the base unit 11 for holding the moving mechanism 9. The base unit 11 holds the moving mechanism 9 so as to keep the direction of movement of the the stage 2 by the moving mechanism 9 coincident with the direction A1 obliquely intersecting with the optical axis L. By this configuration, the stage 2 can be securely moved in the direction A1 obliquely intersecting with the optical axis L.

The imaging element 4 is a two-dimensional imaging element arranged on the optical axis L. Since this configuration allows the system to acquire two-dimensional images from parts of the specimen 3, the whole image of the specimen 3 can be efficiently acquired by making use of the moving mechanism 9

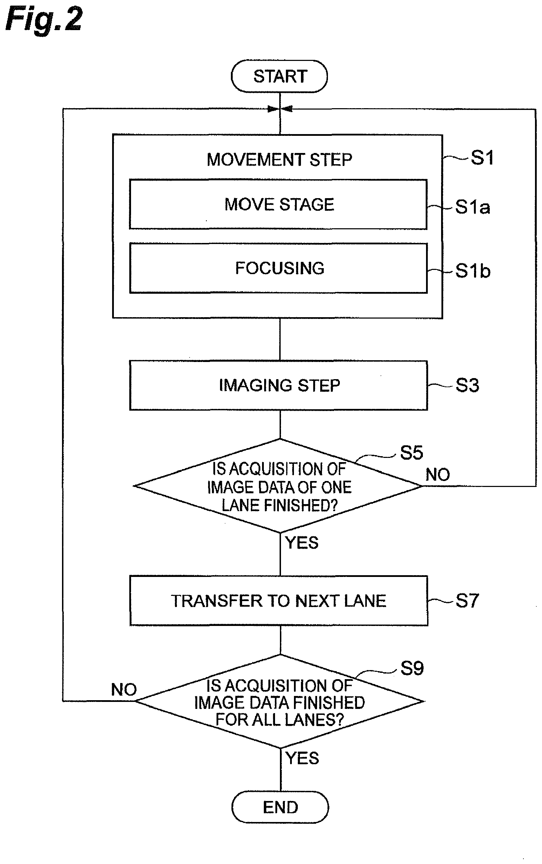

The following will describe the microscope imaging method for acquiring image data with the use of the microscope imaging system 1A. Fig. 2 is a drawing showing major steps in the microscope imaging method. The microscope imaging method of the present embodiment has a movement step S1, an imaging step S3, and a lane transfer step S7.

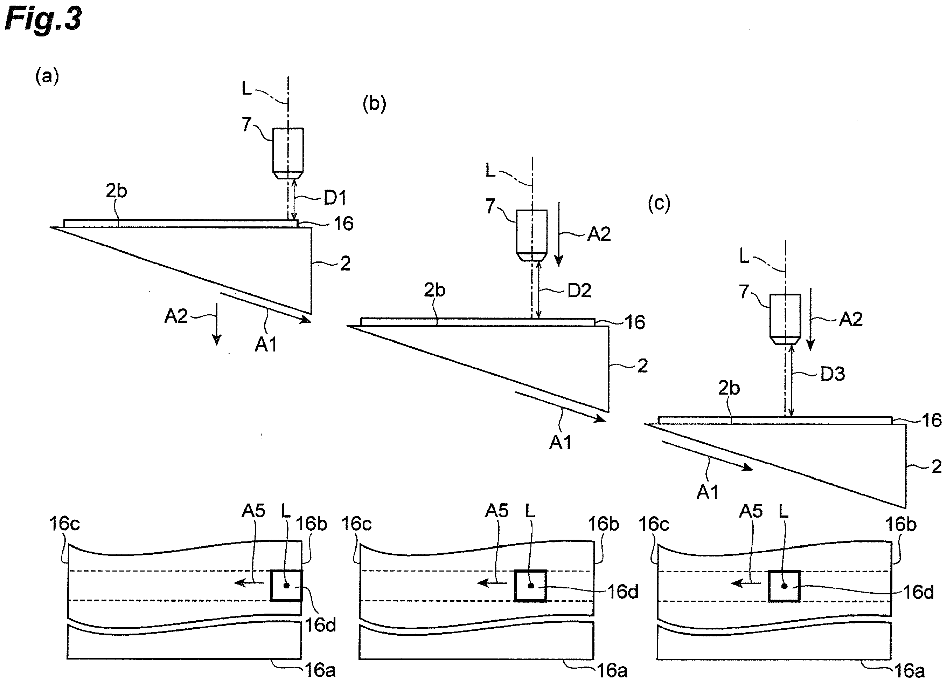

The movement step S1 has a step S1a of moving the stage 2, and a step S1b of focusing. Fig. 3 is a drawing for explaining major steps in the microscope imaging method. With reference to part (a) of Fig. 3, the distance between the objective lens 7 and the slide glass 16 is set to distance D1 and the objective lens 7 is held in focus on the slide glass 16. Next, the moving mechanism 9 is controlled to move the stage 2 in the direction A1 (step S1a). In this movement, the stage 2 is moved in the direction A1 with the mount face 2b being kept orthogonal to the optical axis L. With this movement, the position of the optical axis L on the specimen 3 moves along direction A5 from one long side 16b to the other long side 16c of the slide glass 16 and the position of the slide glass 16 moves in the one direction A2. At this time, the direction of movement of the imaging region 16d is the direction A5 and the direction A5 of movement of the imaging region 16d intersects at a predetermined angle with the moving direction A1 of the stage 2. Therefore, the moving direction A1 of the stage 2 and the moving direction A5 of the imaging region are not parallel.

With reference to part (b) of Fig. 3, the distance between the objective lens 7 and the slide glass 16 increases to distance D2 with this movement of the slide glass 16 in the one direction A2. At this time, the mount face 2b of the stage 2 moves so as to become farther from the objective lens 7 along the optical axis L of the objective lens 7. The focus adjustment driving mechanism 13 is controlled to move the objective lens 7 in the one direction A2 along the optical axis L so as to accommodate this increase of the distance between the objective lens 7 and the stage 2, whereby the focus is adjusted on the imaging region 16d on the slide glass 16 (step S1b). For adjusting the focus on the imaging region 16d on the slide glass 16, it is necessary to move the objective lens 7 at least in the same direction as the movement of the mount face 2b of the stage 2 and the moving direction of the objective lens 7 is limited to the one direction A2. Thereafter, the moving mechanism 9 is again controlled to move the stage 2 in the direction A1 (step S1a).

With reference to part (c) of Fig. 3, the distance between the objective lens 7 and the stage 2 increases to distance D3 with this movement in the direction A1. The focus adjustment driving mechanism 13 is controlled to move the objective lens 7 in the one direction A2 along the optical axis L so as to accommodate this increase of the distance between the objective lens 7 and the stage 2, whereby the focus is adjusted on the imaging region 16d on the slide glass 16 (step S1b). As described above, the objective lens 7 moves only in the one direction A2 along the optical axis L during the process from (a) to (c) in Fig. 3. It is noted that the direction A5 of movement of the imaging region 16d does not have to be limited to the direction from one long side 16b to the other long side 16c of the slide glass 16, but may be a direction from one long side 16c to the other long side 16b of the slide glass 16.

The focusing step S1b is implemented by the pre-focus method or by the real time focus method. In the pre-focus method, a focus map of slide glass 16 is first set before acquisition of image data. Then, in acquisition of image data, focus lines are set for respective lanes, based on the preliminarily-set focus map, a focus line is selected in accordance with a lane as a moving destination, and the distance between the objective lens 7 and the slide glass 16 is adjusted so as to focus on the selected focus line. On the other hand, the real time focus method is a method of finding the distance between the objective lens 7 and the slide glass 16 in focus while acquiring image data. For example, during acquisition of image data of a certain imaging region, focus information is acquired from another imaging region to be imaged next. Then, in acquisition of image data of the next imaging region, the distance between the objective lens 7 and the slide glass 16 is adjusted based on the focus information. In either method, the distance between the objective lens 7 and the slide glass 16 is adjusted by controlling the distance between the objective lens 7 and the stage 2.

In the imaging step S3, thereafter, image through the objective lens is provided onto the imaging element 4 of the imaging unit 6 and the imaging element 4 is controlled to image the specimen 3 and acquire image data.

Part (b) of Fig. 4 is a view of the slide glass 16 from the direction of the optical axis L. As shown in part (b) of Fig. 4, before completion of acquisition of image data from one long side 16b to the other long side 16c of the slide glass 16, the aforementioned movement step S1 and the imaging step S3 are alternately repeated (step S5: NO). The process of alternately repeating the movement step S1 and the imaging step S3 can be applied to both of the pre-focus method and the real time focus method. This belt-like zone from the long side 16b to the other long side 16c is called a lane. After image data is acquired from one lane 16r (step S5: YES), the imaging region transfers to the next lane 16t adjacent to the one lane 16r (step S7). When the acquisition of image data of all lanes is completed, the process of the microscope imaging method is finished (step S9: YES). Unless image data is acquired from all lanes, the operation shifts again to the movement step S1 to acquire image data (step S9: NO). In this manner, the process of acquiring image data from one long side 16b to the other long side 16c is repeated several times and pieces of the image data acquired are combined to acquire the image data of the whole of the slide glass 16.

The present embodiment was described using the example of the process of alternately carrying out the movement step S1 and the imaging step S3. However, the imaging method of the present invention is not limited to the process of alternately carrying out the movement step S1 and the imaging step S3, but the movement step S1 and the imaging step S3 may be carried out simultaneously in parallel. Furthermore, the process of carrying out the movement step S1 and the imaging step S3 simultaneously in parallel can be applied to both of the pre-focus method and the real time focus method. Particularly, when the movement step S 1 and the imaging step S3 are carried out simultaneously in parallel, the moving mechanism 9 is controlled so as to move the stage 2 at a constant speed.

In the foregoing microscope imaging method, since the slide glass 16 carrying the specimen 3 is mounted on the mount face 2b orthogonal to the optical axis L of the objective lens 7, no difference is made in the optical path length from the specimen 3 mounted on the stage 2 to the imaging element 4, in the imaging region 16s. Therefore, the light receiving surface 4a of the imaging element 4 can be simply arranged so as to be orthogonal to the optical axis L, whereby the imaging element 4 can be readily arranged.

Furthermore, the stage 2 carrying the specimen 3 is moved in the direction A1 obliquely intersecting with the optical axis L. With this movement, the stage 2 and the objective lens 7 moves relative to each other in the direction A5 orthogonal to the optical axis L (cf. Fig. 3) and the mount face 2b moves in the one direction A2 away along the optical axis L. Therefore, by letting the objective lens 7 follow, in the one direction, the movement of the stage 2 in the one direction A2 along the optical axis L, it is feasible to suppress vibration due to the following motion of the objective lens 7 and adjust the focus on the specimen 3 with high accuracy. In addition, accuracy is improved in position alignment in combining the image data.

### <Second Embodiment>

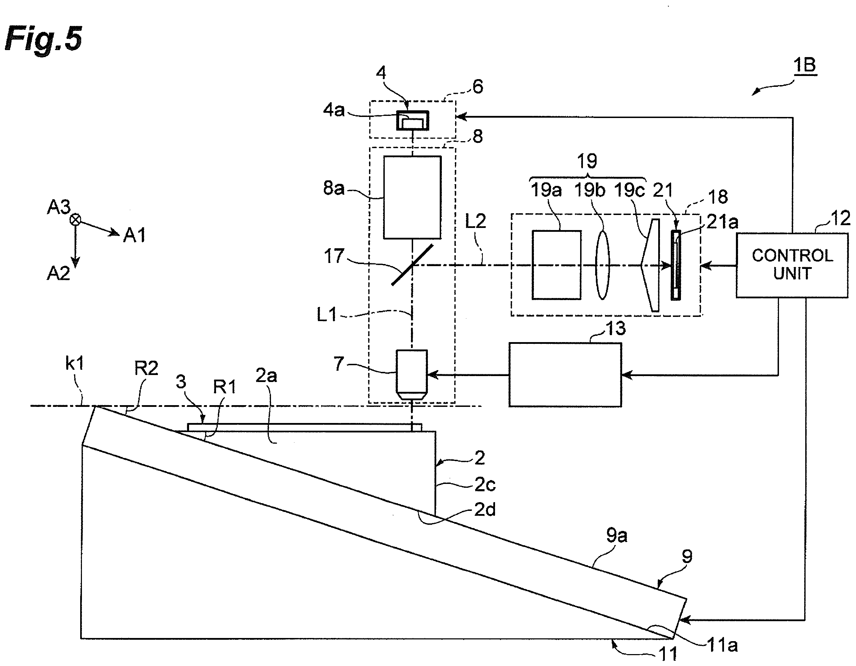

Next, the microscope imaging system according to the second embodiment will be described. Fig. 5 is a drawing schematically showing a configuration of the microscope imaging system 1B according to the second embodiment. The microscope imaging system 1B is different from the microscope imaging system 1A of the first embodiment in that the imaging optical unit 8 includes an optical component 17 and in that the microscope imaging system is provided with a focus detection camera 18 as a focus information acquisition unit for acquiring focus information of the objective lens 7. The below will detail the optical component 17 and the focus detection camera 18.

The optical component 17 splits light from the specimen 3 to guide a split beam from the specimen 3 onto the imaging element 4 and guide the other split beam into the focus detection camera 18. The optical component 17 is arranged on the optical axis L1 between the objective lens 7 and the optics 8a. This optical component 17 to be used herein is, for example, a beam splitter.

The focus detection camera 18 is a unit for acquiring focus information of the objective lens 7. This focus detection camera 18 is provided with an imaging element 21 for acquiring two-dimensional image data and is configured to acquire the focus information of the objective lens 7, based on the image data acquired by this imaging element 21, and output the information to the control unit 12. The focus information includes, for example, information of whether the focus of the objective lens 7 is on the specimen 3. When the focus of the objective lens 7 is on the specimen 3, the control unit 12 controls the focus adjustment driving mechanism 13 to maintain the position of the objective lens 7. On the other hand, when the focus of the objective lens 7 is off the specimen 3, the control unit 12 controls the focus adjustment driving mechanism 13 to adjust the position of the objective lens 7 so as to focus on the specimen 3.

The focus detection camera 18 is arranged on an optical axis L2 of the objective lens 7 separated as a branch from the optical axis L1 by the optical component 17. The focus detection camera 18 is provided with an optics 19 including optical components 19a, 19c, a lens 19b, and so on, and the imaging element 21. The imaging element 21 of the focus detection camera 18 is arranged so that its light receiving surface 2 la is orthogonal to the optical axis L2.

In the microscope imaging system 1B, since the specimen 3 is mounted on the mount face 2b orthogonal to the optical axis L of the objective lens 7, no difference is made in the optical path length from the specimen 3 mounted on the stage 2 to the imaging element 21 of the focus detection camera 18, in the imaging region. Therefore, the imaging element 21 can be readily arranged because the light receiving surface 21a of the imaging element 21 can be simply arranged so as to be orthogonal to the optical axis L2.

Furthermore, since the microscope imaging system 1B is provided with the focus detection camera 18, the focus of the objective lens 7 can be automatically adjusted on the specimen 3 with high accuracy.

In the above microscope imaging method, even in the case where the imaging element 21 to be used is one which acquires two-dimensional image data for focus detection, the slide glass 16 with the specimen 3 thereon is mounted on the mount face 2b orthogonal to the optical axis L of the objective lens 7; for this reason, no difference is made in the optical path length from the specimen 3 mounted on the stage 2 to the imaging element 21, in the imaging region 16s. Therefore, the light receiving surface 21a of the imaging element 21 can be simply arranged so as to be orthogonal to the optical axis L, whereby the imaging element 21 can be readily arranged. It should be noted herein that usage of the imaging element 21 for acquiring the two-dimensional image data is not limited only to the focus detection.

The present invention does not have to be limited to the above-described embodiments.

The moving mechanism 9 may be configured in any configuration permitting the movement of the stage 2 in the direction A1 obliquely intersecting with the optical axis L. For example, it is possible to adopt a configuration wherein the stage 2 is moved in a pendent state.

The imaging element 4 may be one capable of one-dimensional imaging. For example, the imaging element 4 to be employed may be a one-dimensional imaging element such as a CCD sensor to which the TDI (Time Delay Integration) method being one of charge transfer control methods of CCD is applied, or a line sensor. In this case, as shown in part (c) of Fig. 4, the image data may be acquired while the stage 2 is moved at a constant speed. In this configuration, since an imaging region 16u is relatively moved at the constant speed from the one long side 16b to the other long side 16c, an image of one lane 16r can be acquired by performing imaging at regular intervals.

Particularly, when the CCD sensor capable of TDI charge transfer is adopted as the imaging element 4, the light receiving surface is larger than in the line sensor; however, since in the foregoing microscope imaging method the slide glass 16 with the specimen 3 thereon is mounted on the mount face 2b orthogonal to the optical axis L of the objective lens 7, no difference is made in the optical path length from the specimen 3 mounted on the stage 2 to the imaging element 4, in the imaging region 16s. Therefore, the imaging element 4 can be readily arranged because the light receiving surface of the imaging element 4 can be simply arranged so as to be orthogonal to the optical axis L.

Furthermore, in the foregoing microscope imaging method, the direction A5 of movement of the imaging region 16d and the moving direction A1 of the stage 2 intersect at the predetermined angle. Namely, the moving direction A1 of the stage 2 is not parallel to the moving direction A5 of the imaging region. Therefore, the mount face 2b of the stage 2 moves so as to become farther from or closer to the objective lens 7 along the optical axis L of the objective lens 7. Therefore, in order to focus on the specimen 3, the objective lens 7 needs to be moved in the same direction as the movement of the mount face 2b of the stage 2, and thus the moving direction of the objective lens 7 is limited to one direction. This makes it possible to suppress vibration produced during bidirectional movement of the objective lens.

### Industrial Applicability

The microscope imaging systems and microscope imaging methods according to the present invention have enabled easy arrangement of the imaging element while facilitating the accurate focus adjustment.

### Reference Signs List

1A, 1B, 100 microscope imaging system; 2 stage; 2b mount face; 2d contact face; 4 imaging element; 6 imaging unit; 7 objective lens; 8 imaging optical unit; 9 moving mechanism; 9a slant face; 11 base unit; 12 control unit; 13 focus adjustment driving mechanism; 16 slide glass; 17 focus information acquisition unit; 18 focus detection camera; L, L1, L2 optical axes; S1 movement step; S3 imaging step.

## Claims

1. A microscope imaging system (1A, 1B) comprising:
a stage (2) having a mount face (2b) on which a specimen (3) is to be mounted;
an imaging unit (6) having an imaging element (4) for imaging a part of an imaging region set on the mount face (2b); and
an imaging optical unit (8) arranged between the stage (2) and the imaging unit (6) and having an objective lens (7) for imaging light from the part of the imaging region onto the imaging unit (6),
wherein the stage (2) is arranged so that the mount face (2b) is orthogonal to an optical axis (L, L1) of the objective lens (7), and
wherein the stage (2) is configured to be movable in a first direction (A1) obliquely intersecting with the optical axis (L, L1) while the mount face (2b) is kept orthogonal to the optical axis (L, L1),
a moving mechanism (9) for moving the stage (2) in the first direction (A1) obliquely intersecting with the optical axis (L, L1) and a second direction (A3) orthogonal to the first direction (A1),
a focus adjustment driving mechanism (13) for moving the objective lens (7) in a direction (A2) along the optical axis (L, L1), and
**characterized by** the system (1A, 1B) further comprising
a control unit (12) configured to control, during a microscope imaging method, the moving mechanism (9) to move the stage (2) in the first direction (A1) and in the second direction (A3), and to control, during the microscope imaging method, the focus adjustment driving mechanism (13) so as to adjust a focus of the objective lens (7) on the specimen (3) in correspondence to the movement of the stage (2) in the first direction (A1), wherein, for adjusting the focus of the objective lens (7) on the specimen (3), a moving direction of the objective lens (7) is limited to the one direction (A2) along the optical axis (L, L1).

2. The microscope imaging system (1A, 1B) according to claim 1,
wherein the moving mechanism (9) has a slant face (9a) in contact with the stage (2), and
wherein the slant face (9a) extends in the direction (A1) obliquely intersecting with the optical axis (L, L1).

3. The microscope imaging system (1A, 1B) according to claim 2, wherein an angle (R1) between the mount face (2b) of the stage and a contact face (2d) of the stage (2) in contact with the slant face (9a) of the moving mechanism (9) is equal to an angle (R2) between a virtual plane (k1) orthogonal to the optical axis (L, L1) and the slant face (9a) of the moving mechanism (9).

4. The microscope imaging system (1A, 1B) according to any one of claims 1 to 3, further comprising:
a base unit (11) for holding the moving mechanism (9),
wherein the base unit (11) holds the moving mechanism (9) so that the direction in which the moving mechanism (9) moves the stage (2) is coincident with the direction (A1) obliquely intersecting with the optical axis (L, L1).

5. The microscope imaging system (1A, 1B) according to any one of claims 1 to 4, wherein the imaging element (4) is arranged on the optical axis (L, L1) and acquires a two-dimensional image of the part of the imaging region.

6. The microscope imaging system (1A, 1B) according to any one of claims 1 to 5, wherein the imaging element (4) acquires focus information of the objective lens (7).

7. A microscope imaging method comprising:
a movement step (S1) of moving a stage (2) having a mount face (2b) on which a specimen is to be mounted, and an objective lens (7) for imaging light from a part of an imaging region set on the mount face (2b); and
an imaging step (S3) of condensing the light imaged by the objective lens (7), onto an imaging unit (6) and imaging the part of the imaging region, based on the light condensed on the imaging unit (6),
wherein the movement step (S1) comprises: moving the stage (2) in a first direction (A1) obliquely intersecting with an optical axis (L, L1) of the objective lens (7), in a state in which the mount face (2b) is orthogonal to the optical axis (L, L1),
**characterized in that**
the movement step (S1) further comprises moving the stage (2) in the first direction (A1) obliquely intersecting with the optical axis (L, L1) and a second direction (A3) orthogonal to the first direction (A1) by means of a moving mechanism (9),
moving the objective lens (7) in a direction (A2) along the optical axis (L, L1) by means of a focus adjustment driving mechanism (13), and
controlling, during the microscope imaging method, the moving mechanism (9) to move the stage (2) in the first direction (A1) and in the second direction (A3), and controlling, during the microscope imaging method, the focus adjustment driving mechanism (13) so as to adjust a focus of the objective lens (7) on the specimen (3) in correspondence to the movement of the stage (2) in the first direction (A1) by means of a control unit (12) , wherein, for adjusting the focus of the objective lens (7) on the specimen (3), a moving direction of the objective lens (7) is limited to the one direction (A2) along the optical axis (L, L1).

## Patentansprüche

1. Mikroskop-Bildgebungssystem (1A, 1B), das Folgendes umfasst:
einen Objektträger (2), der eine Befestigungsfläche (2b) aufweist, an der eine Probe (3) befestigt werden soll;
eine Bildgebungseinheit (6), die ein Bildgebungselement (4) zur Bildgebung eines Teils eines Bildgebungsbereichs, der auf der Befestigungsfläche (2b) eingestellt ist, aufweist; und
eine optische Bildgebungseinheit (8), die zwischen dem Objektträger (2) und der Bildgebungseinheit (6) eingerichtet ist und eine Objektivlinse (7) zum Abbilden von Licht von dem Teil des Bildgebungsbereichs auf die Bildgebungseinheit (6) aufweist,
wobei der Objektträger (2) derart eingerichtet ist, dass die Befestigungsfläche (2b) zu einer optischen Achse (L, L1) der Objektivlinse (7) orthogonal ist, und
wobei der Objektträger (2) derart konfiguriert ist, dass er in einer ersten Richtung (A1), die die optische Achse (L, L1) schräg schneidet, bewegbar ist, während die Befestigungsfläche (2b) zu der optischen Achse (L, L1) orthogonal gehalten wird,
einen Bewegungsmechanismus (9) zum Bewegen des Objektträgers (2) in der ersten Richtung (A1), die die optische Achse (L, L1) schräg schneidet, und einer zweiten Richtung (A3) orthogonal zu der ersten Richtung (A1),
einen Fokuseinstellantriebsmechanismus (13) zum Bewegen der Objektivlinse (7) in einer Richtung (A2) entlang der optischen Achse (L, L1), und
**dadurch gekennzeichnet, dass** das System (1A, 1B) weiter Folgendes umfasst
eine Steuereinheit (12), die dazu konfiguriert ist, während eines Mikroskop-Bildgebungsverfahrens den Bewegungsmechanismus (9) zu steuern, um den Objektträger (2) in der ersten Richtung (A1) und in der zweiten Richtung (A3) zu bewegen und während des Mikroskop-Bildgebungsverfahrens den Fokuseinstellantriebsmechanismus (13) derart zu steuern, dass ein Fokus der Objektivlinse (7) auf der Probe (3) in Übereinstimmung mit der Bewegung des Objektträgers (2) in der ersten Richtung (A1) eingestellt wird, wobei zum Einstellen des Fokus der Objektivlinse (7) auf der Probe (3) eine Bewegungsrichtung der Objektivlinse (7) auf die eine Richtung (A2) entlang der optischen Achse (L, L1) beschränkt ist.

2. Mikroskop-Bildgebungssystem (1A, 1B) nach Anspruch 1,
wobei der Bewegungsmechanismus (9) eine schräge Fläche (9a) in Berührung mit dem Objektträger (2) aufweist, und
wobei sich die schräge Fläche (9a) in der Richtung (A1), die die optische Achse (L, L1) schräg schneidet, erstreckt.

3. Mikroskop-Bildgebungssystem (1A, 1B) nach Anspruch 2, wobei ein Winkel (R1) zwischen der Befestigungsfläche (2b) des Objektträgers und einer Kontaktfläche (2d) des Objektträgers (2) in Berührung mit der schrägen Fläche (9a) des Bewegungsmechanismus (9) gleich einem Winkel (R2) zwischen einer virtuellen Ebene (k1) orthogonal zu der optischen Achse (L, L1) und der schrägen Fläche (9a) des Bewegungsmechanismus (9) ist.

4. Mikroskop-Bildgebungssystem (1A, 1B) nach einem der Ansprüche 1 bis 3, das weiter Folgendes umfasst:
eine Basiseinheit (11) zum Halten des Bewegungsmechanismus (9),
wobei die Basiseinheit (11) den Bewegungsmechanismus (9) derart hält, dass die Richtung, in die der Bewegungsmechanismus (9) den Objektträger (2) bewegt, mit der Richtung (A1), die die optische Achse (L, L1) schräg schneidet, übereinstimmt.

5. Mikroskop-Bildgebungssystem (1A, 1B) nach einem der Ansprüche 1 bis 4, wobei das Bildgebungselement (4) an der optischen Achse (L, L1) eingerichtet ist und ein zweidimensionales Bild des Teils des Bildgebungsbereichs erhebt.

6. Mikroskop-Bildgebungssystem (1A, 1B) nach einem der Ansprüche 1 bis 5, wobei das Bildgebungselement (4) Fokusinformationen der Objektivlinse (7) erhebt.

7. Mikroskop-Bildgebungsverfahren, das Folgendes umfasst:
einen Bewegungsschritt (S1) zum Bewegen eines Objektträgers (2), der eine Befestigungsfläche (2b) aufweist, an der eine Probe montiert werden soll, und eine Objektivlinse (7) zum Abbilden von Licht von einem Teil eines Bildgebungsbereichs, der auf der Befestigungsfläche (2b) eingestellt ist; und
einen Abbildungschritt (S3) des Kondensierens des Lichts, das von der Objektivlinse (7) abgebildet wird, auf eine Bildgebungseinheit (6) und Abbildens des Teils des Bildgebungsbereichs basierend auf dem Licht, das auf der Bildgebungseinheit (6) kondensiert ist,
wobei der Bewegungsschritt (S1) Folgendes umfasst: Bewegen des Objektträgers (2) in einer ersten Richtung (A1), die eine optische Achse (L, L1) der Objektivlinse (7) schräg schneidet, in einem Zustand, in dem die Befestigungsfläche (2b) zu der optischen Achse (L, L1) orthogonal ist,
**dadurch gekennzeichnet, dass**
der Bewegungsschritt (S1) weiter das Bewegen des Objektträgers (2) in der ersten Richtung (A1), die die optische Achse (L, L1) schräg schneidet, und einer zweiten Richtung (A3) orthogonal zu der ersten Richtung (A 1) mittels eines Bewegungsmechanismus (9) umfasst,
Bewegen der Objektivlinse (7) in einer Richtung (A2) entlang der optischen Achse (L, L1) mittels eines Fokuseinstellantriebsmechanismus (13), und
während des Mikroskop-Bildgebungsverfahrens, Steuern des Bewegungsmechanismus (9), um den Objektträger (2) in der ersten Richtung (A1) und in der zweiten Richtung (A3) zu bewegen und während des Mikroskop-Bildgebungsverfahrens Steuern des Fokuseinstellantriebsmechanismus (13) derart, dass ein Fokus der Objektivlinse (7) auf der Probe (3) in Übereinstimmung mit der Bewegung des Objektträgers (2) in der ersten Richtung (A1) mittels einer Steuereinheit (12) eingestellt wird, wobei zum Einstellen des Fokus der Objektivlinse (7) auf der Probe (3) eine Bewegungsrichtung der Objektivlinse (7) auf die eine Richtung (A2) entlang der optischen Achse (L, L1) beschränkt ist.

## Revendications

1. Système d'imagerie de microscope (1A, 1B) comprenant :
une platine (2) présentant une face de montage (2b) sur laquelle un échantillon (3) doit être monté ;
une unité d'imagerie (6) présentant un élément d'imagerie (4) pour imager une partie d'une région d'imagerie définie sur la face de montage (2b) ; et
une unité optique d'imagerie (8) agencée entre la platine (2) et l'unité d'imagerie (6) et présentant une lentille d'objectif (7) pour imager de la lumière depuis la partie de la région d'imagerie sur l'unité d'imagerie (6),
dans lequel la platine (2) est agencée de sorte que la face de montage (2b) soit orthogonale à un axe optique (L, L1) de la lentille d'objectif (7), et
dans lequel la platine (2) est configurée pour être mobile dans une première direction (A1) croisant obliquement l'axe optique (L, L1) tandis que la face de montage (2b) reste orthogonale à l'axe optique (L, L1),
un mécanisme de déplacement (9) pour déplacer la platine (2) dans la première direction (A1) croisant obliquement l'axe optique (L, L1) et une seconde direction (A3) orthogonale à la première direction (A1),
un mécanisme d'entraînement de mise au point (13) pour déplacer la lentille d'objectif (7) dans une direction (A2) le long de l'axe optique (L, L1), et
**caractérisé par** le système (1A, 1B) comprenant en outre
une unité de commande (12) configurée pour commander, durant un procédé d'imagerie de microscope, le mécanisme de déplacement (9) pour déplacer la platine (2) dans la première direction (A1) et dans la seconde direction (A3), et pour commander, durant le procédé d'imagerie de microscope, le mécanisme d'entraînement de mise au point (13) de manière à faire la mise au point de la lentille d'objectif (7) sur l'échantillon (3) conformément au déplacement de la platine (2) dans la première direction (A1), dans lequel, pour effectuer la mise au point de la lentille d'objectif (7) sur l'échantillon (3), une direction de déplacement de la lentille d'objectif (7) est limitée à la direction (A2) le long de l'axe optique (L, L1).

2. Système d'imagerie de microscope (1A, 1B) selon la revendication 1,
dans lequel le mécanisme de déplacement (9) présente une face inclinée (9a) en contact avec la platine (2), et
dans lequel la face inclinée (9a) s'étend dans la direction (A1) croisant obliquement l'axe optique (L, L1).

3. Système d'imagerie de microscope (1A, 1B) selon la revendication 2, dans lequel un angle (R1) entre la face de montage (2b) de la platine et une face de contact (2d) de la platine (2) en contact avec la face inclinée (9a) du mécanisme de déplacement (9) est égal à un angle (R2) entre un plan virtuel (k1) orthogonal à l'axe optique (L, L1) et la face inclinée (9a) du mécanisme de déplacement (9).

4. Système d'imagerie de microscope (1A, 1B) selon l'une quelconque des revendications 1 à 3, comprenant en outre :
une unité de base (11) pour tenir le mécanisme de déplacement (9),
dans lequel l'unité de base (11) tient le mécanisme de déplacement (9) de sorte que la direction dans laquelle le mécanisme de déplacement (9) déplace la platine (2) coïncide avec la direction (A1) croisant obliquement l'axe optique (L, L1).

5. Système d'imagerie de microscope (1A, 1B) selon l'une quelconque des revendications 1 à 4, dans lequel l'élément d'imagerie (4) est agencé sur l'axe optique (L, L1) et acquiert une image bidimensionnelle de la partie de la région d'imagerie.

6. Système d'imagerie de microscope (1A, 1B) selon l'une quelconque des revendications 1 à 5, dans lequel l'élément d'imagerie (4) acquiert des informations de focale de la lentille d'objectif (7).

7. Procédé d'imagerie de microscope comprenant :
une étape de déplacement (51) consistant à déplacer une platine (2) présentant une face de montage (2b) sur laquelle un échantillon doit être monté, et une lentille d'objectif (7) pour imager de la lumière depuis une partie d'une région d'imagerie définie sur la face de montage (2b) ; et
une étape d'imagerie (S3) consistant à condenser la lumière imagée par la lentille d'objectif (7), sur une unité d'imagerie (6) et à imager la partie de la région d'imagerie, sur la base de la lumière condensée sur l'unité d'imagerie (6),
dans lequel l'étape de déplacement (S1) comprend : un déplacement de la platine (2) dans une première direction (A1) croisant obliquement un axe optique (L, L1) de la lentille d'objectif (7), dans un état dans lequel la face de montage (2b) est orthogonale à l'axe optique (L, L1),
**caractérisé en ce que**
l'étape de déplacement (S1) comprend en outre un déplacement de la platine (2) dans la première direction (A1) croisant obliquement l'axe optique (L, L1) et une seconde direction (A3) orthogonale à la première direction (A1) au moyen d'un mécanisme de déplacement (9),
un déplacement de la lentille d'objectif (7) dans une direction (A2) le long de l'axe optique (L, L1) au moyen d'un mécanisme d'entraînement de mise au point (13), et
une commande, durant le procédé d'imagerie de microscope, du mécanisme de déplacement (9) pour déplacer la platine (2) dans la première direction (A1) et dans la seconde direction (A3), et une commande, durant le procédé d'imagerie de microscope, du mécanisme d'entraînement de mise au point (13) de manière à effectuer une mise au point de la lentille d'objectif (7) sur l'échantillon (3) conformément au déplacement de la platine (2) dans la première direction (A1) au moyen d'une unité de commande (12), dans lequel, pour effectuer la mise au point de la lentille d'objectif (7) sur l'échantillon (3), une direction de déplacement de la lentille d'objectif (7) est limitée à la direction (A2) le long de l'axe optique (L, L1).
